# EUROPEAN PATENT APPLICATION

(11) **EP 1 857 929 A1**
(43) Date of publication of application: **21.11.2007**
(21) Application number: 06290813.2
(22) Date of filing: 18.05.2006
(51) Int. Cl.: G06F 9/44

(54) **Method to create a set of instructions applicable to distinct versions of a software application**

(71) Applicant: Alcatel Lucent, 75008 Paris (FR)
(72) Inventor: Liekens, Werner Mario, 2860 Sint Katelijne Waver (BE); Denissen, Frank Lodewijk, 2850 Boom (BE); van Hove, Hendrik Germain, 2530 Boechout (BE); Coenen, Maria Jozef Huberte, 2000 Antwerp (BE)
(74) Representative: Narmon, Gisèle Marie Thérèse

(57) **Abstract**

A method to create a set of instructions (I2N) by means of a Command Line Interface CLI. The set of instruction is loaded in a database and comprises instructions to control the operation of different versions (R1, R2) of a software application. To this end, each instruction of the set is identified by a context tag (0, 1, 2) indicating to which version (R1, R2) of the application this instruction is applicable or that this instruction is applicable to any version of the application. In more detail, context-tags are names or numbers amongst which "0" means, for instance, that the corresponding instruction is applicable to all the versions of the application, and "1" to "n" means that the corresponding instruction is only applicable to a "1^{st}"-"n^{th}" version of the application respectively.

## Description

The present invention relates to a method to create a set of instructions by means of a Command Line Interface, said set of instruction being loaded in a database in order to control the operation of a software application.

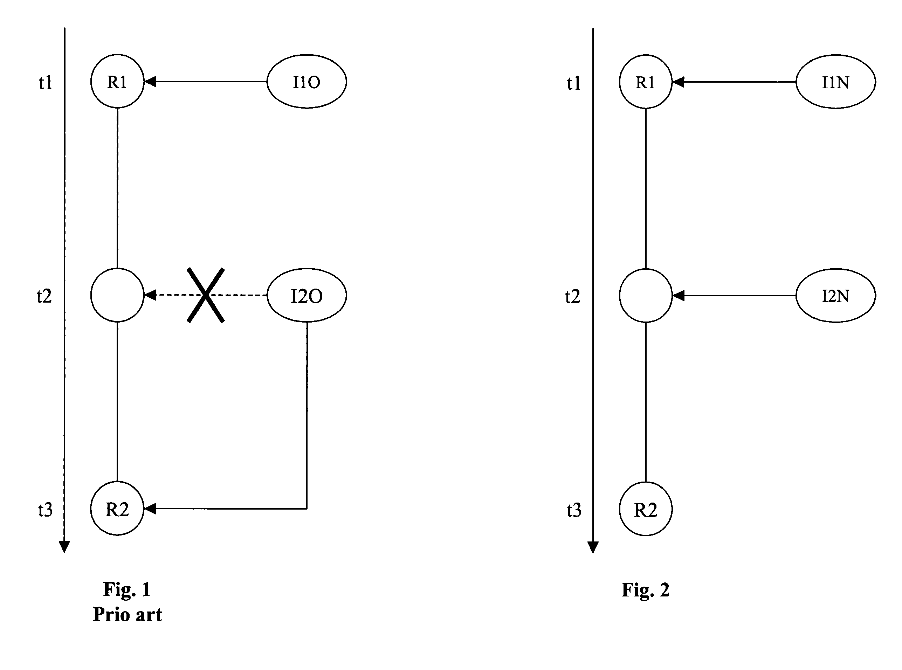

Such a method is generally known in the art, e.g. in the field of telecommunication systems, and the Command Line Interface CLI is a method of interacting with a system by generating command lines, i.e. a set of instructions, such as I10, I20 shown at Fig. 1, either from keyboard or from a script. When the CLI is developed and the set of instructions is released for a particular version or release, e.g. R1, R2, of a software application or product to the customer, it is impossible to change the syntax, i.e. the instructions of the set, in a backward compatible way. The customer needs to use the scripts to re-do automatic configuration of the system. So, when the software application is changed, e.g. towards a newer version or release, the set of instructions needs to be adapted as well, and vice versa, what results in high cost for the customer. As an example referring to the time line t1, t2, t3 of Fig. 1, a new set of instructions I20 may only be used at a time t3 when the version R2 of the software application is also available, even if I20 was available at an earlier time t2. Reciprocally, at the time t3 the set of instructions I10 is no longer usable because of the new release R2 of the software application, that is generally incompatible with the previous version R1.

An object of the present invention is to provide a method of the above known type but wherein the set of instructions generated by the Command Line Interface CLI scripts is no so strongly coupled the versions of the software application.

According to the invention, this object is achieved due to the fact that each instruction of the set created by said Command Line Interface CLI is applicable to at least one of different versions of said software application, and that each instruction of said set is identified by a context tag indicating to which version of said software application said instruction is applicable.

In this way, it is no longer necessary to update the set of instructions together with the release of a new version of the software application.

The present invention is further characterized in that possible values of said context-tag are 'all', 'actual', 'normal', 'deprecated', 'future', 'debug', 'ignore'.

The CLI-XML specification or script adds a context tag that specifies in which CLI context or version of the software application the CLI command or instruction can be used. Some instructions only apply to a "Deprecated" version of the application, whilst other instructions only apply to the "Actual" version.

It is to be noted that the meaning of the context tag may be extended, e.g. to "Future" or "Debug" version of the application.

The present invention is further also characterized in that said set of instructions comprises at least all the instructions applicable to one version of said software application.

Another characteristic feature of the present invention is that at least one instruction of said set is applicable to any version of said software application.

Other instructions carry a particular context tag indicating that they may be used only by one particular version of the application.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 schematically represents along a time line a known method to provide instructions to different releases of a software application; and
Fig. 2 schematically represents along a same time line the implementation of an improved method according to the present invention.

The present invention relates to a method for creating a set of instructions that is applicable to different versions of a software application. Such a method is for instance used in the field of telecommunication systems where a Command Line Interface CLI generates CLI commands, i.e. sets of instructions such as I10 and I20 shown at Fig. 1, either from a keyboard or from a script. In the prior art system represented at Fig. 1, a set of instructions I10 is released and used at a time moment t1 simultaneously with the release R1 of a first version of the software application or product to the customer. This means that a newer set of instructions I20, although already available at a time moment t2, may not be used or applied to the application at t2, but only at a later time moment t3 when a new release R2 or second version of the software application is available.

The present method defines multiple CLI-contexts whereby it is possible to use a same set of instructions over different releases or versions of the software application, as shown at Fig. 2, while keeping it backwards compatible.

The Command Line Interface CLI generates CLI commands or sets of instructions to be loaded in a database in order to control the operation of different versions or releases R1, R2 of a software application. In the following example, only two sets of instructions I1N and I2N are created to simplify the description although most any amount of sets may be generated by the CLI. The first set of instructions I1N comprises instructions applicable to a first version R1 of the software application, whilst the second set of instructions I2N comprises, amongst other, instructions applicable to a second version R2 of the software application. Fig. 2 shows that the first version R1 of the software application is released at a time moment t1, whilst the second version R2 of the software application is released at a time moment t3, although the second set of instructions I2N is already available at an earlier time moment t2.

At the time moment t2, the set of instructions IN2 comprises instructions applicable to the version R1 of the software application, instructions applicable to the version R2 of the software application, and instructions applicable to the two versions R1 and R2 of the software application; the instructions applicable to the version R1 as well as a portion of the instructions applicable to the two versions R1 and R2, corresponding to the instructions of the former set I1N.

To distinguish the first set of instructions I1N from the second set of instructions I2N amongst all the instructions generated by the Command Line Interface CLI, each instruction is associated with a context tag. This context tag identifies the set by indicating to which version R1 or R2 of the software application the instruction is applicable or indicates that the instruction is applicable to any version of the software application. The context-tag may be a name such as 'all', 'actual', 'normal', 'deprecated', 'future', 'debug', 'ignore', ... or a number 0, 1, 2, 3, 4, ... as in the present example.

In more detail:
- a context-tag 0 means that the corresponding instruction is applicable to "all" the versions R1 and R2 of the software application. Such an instruction must thus be available for the version R1 as well as for the version R2 of the application;
- a context-tag 1 means that the corresponding instruction is only applicable to the version R1 of the application. This version R1 is called "deprecated" indicating that the instruction or CLI command will be removed in one of the coming releases;
- a context-tag 2 means that the corresponding instruction is only applicable to the version R2 of the application. This version R2 is called "actual" or "normal" indicating that the instruction or CLI command can replace one of the deprecated CLI commands.

Additionally, the context-tag may also have the values:
- 3 for indicating "future" whereby the CLI command is not present in the current release but will be available in one of the coming releases; or
- 4 for indicating "debug" whereby the CLI command is only visible to special CLI users.

The values 1 to 4, and more particularly 3 and 4, are chosen here as an example and may obviously be different and/or extended to other context-tag values.

In any case, a set of instructions must comprise at least all the instructions applicable to one version or release of the software application to which it applies.

Since the set of instructions I2N generated by CLI is applicable to different versions R1, R2 of the software application, this set comprises at least instructions with context-tags 0, 1 and 2. As a result, this set may be loaded into the database at a time moment t2, even if this time moment t2 is earlier than the release time moment t3 of the version R2 of the software application.

A user that wants to run the software application needs first to login to the system. To this end, the user must have an account with a specific name and password.

A user account is linked to a user profile. The user profile must be created before the user account can be created. The user profile determines most of the user's properties. The user profile is typically used to limit the commands or instructions that a group of users can execute to those for which they have the necessary skills and for which they are responsible.

A first user profile that will select deprecated CLI commands is created, whilst a second user profile that will select actual CLI commands is also created.

Users accounts are then created for these first and second user profiles.

The user having the first user account is going to use the deprecated CLI context corresponding instructions of the set I1N applicable to the first version R1 of the application, whilst the user having the second user account is using the actual CLI context corresponding to corresponding instructions of the set I2N applicable to the second version R2 of the application, as well as to the first version R1 thereof.

The first user runs through the CLI-database with instructions having the context-tags 1 (deprecated) and 0 (all). It will never use instructions having the context-tag 2 (normal). On the other hand, the second user runs through the CLI-database with instructions having the context-tags 2 (normal) and 0 (all). The second user will not use instructions having the context-tag 1 (deprecated), but can however do it if necessary when running on the older version R1 of the application.

It is finally to be noted that within the software application, each instruction may lead either to another instruction of the same set, to a parameter, or to the execution of an operation in the application.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to create a set of instructions by means of a Command Line Interface CLI, said set of instruction being loaded in a database in order to control the operation of a software application,
***characterized in that*** each instruction of the set (I2N) created by said Command Line Interface CLI is applicable to at least one of different versions (R1, R2) of said software application,
***and in that*** each instruction of said set is identified by a context tag (0, 1, 2) indicating to which version (R1, R2) of said software application said instruction is applicable.

2. The method according to claim 1, ***characterized in that** possible* values of said context-tag are 'all', 'actual', 'normal', 'deprecated', 'future', 'debug', 'ignore'.

3. The method according to claim 1, ***characterized in that*** said set of instructions (I2N) comprises at least all the instructions applicable to one version (R1, R2) of said software application.

4. The method according to claim **1**, ***characterized in that*** possible values of said context-tag are:
0: indicating that the corresponding instruction is applicable to all the versions (R1, R2) of said software application; or
a value from 1 to n: indicating that the corresponding instruction is only applicable to a 1^{st} - n^{th} respective version of said software application.

5. The method according to claim 1, ***characterized in that*** each instruction may lead either
to another instruction of said set of instructions;
to a parameter; or
to the execution of an operation in said software application.

6. The method according to claim 1, ***characterized in that*** at least one instruction of said set is applicable to any version of said software application.
